# EUROPÄISCHE PATENTSCHRIFT

(11) **EP 4 321 009 B1**
(45) Veröffentlichungstag und Bekanntmachung des Hinweises auf die Patenterteilung: **05.03.2025**
(21) Anmeldenummer: 23185540.4
(22) Anmeldetag: 14.07.2023
(51) Int. Cl.: A01D 34/135

(54) **DOPPELMESSER-SCHNEIDSYSTEM**
DUAL KNIFE CUTTING SYSTEM
SYSTÈME DE COUPE À DOUBLE COUTEAU

(30) Priorität: 12.08.2022 DE 102022120467; 21.10.2022 DE 102022127922
(43) Veröffentlichungstag der Anmeldung: 14.02.2024
(73) Patentinhaber: ESM Ennepetaler Schneid- u. Mähtechnik GmbH & Co. KG, 58256 Ennepetal (DE)
(72) Erfinder: Rutz, Detlef, 42499 Hückeswagen (DE)
(74) Vertreter: Patentanwälte Dörner & Kötter PartG mbB

(56) Entgegenhaltungen:
- DE-A1- 1 582 418
- DE-A1- 19 507 265

## Beschreibung

Die Erfindung betrifft ein Doppelmesser-Schneidsystem bestehend aus einem Balkenrücken, an dem ein Messerrücken für ein Obermesser und ein Messerrücken für ein Untermesser angeordnet sind, und an den Messerrücken eine Vielzahl von Doppelmesser-Schneidelementen befestigt sind, wobei Ober- und Untermesser oszillierend hin- und hergehend angetrieben sind, und an dem Balkenrücken Messerführungen für das Obermesser und Messerführungen für das Untermesser befestigt sind, die Führungsarme umfassen, wobei an dem Balkenrücken auf seiner den Messerführungen abgewandten Seite zumindest in dem Bereich zwischen benachbarten Messerführungen mit Führungsarmen für das Untermesser und den Messerführungen mit Führungsarmen für das Obermesser jeweils ein Vorsprung ausgebildet ist.

Die hier betrachteten Doppelmesser-Schneidsysteme finden Anwendung, um Halmgüter aller Art wie Grünfutter, Sonderkulturen, Getreide, Gemüse oder dergleichen zu schneiden. Sie finden darüber hinaus Anwendung beim Schnitt von Hecken, Straßenbegleitgrün oder in der Gewässerpflege (Gewässerrändern ebenso wie unter Wasser).

Ein solches Doppelmesser-Schneidsystem sind beispielsweise aus der DE 31 02 861 A1 und der DE 15 82 418 A1 bekannt. Mittels Doppelmesser-Schneidsystemen ist besonders bei nur geringer Antriebsleistung ein optimales Mähergebnis bei gleichzeitig großen Arbeitsbreiten erzielbar. Insbesondere ein sauberer, glatter, erschütterungsarmer Schnitt des Mähgutes zeichnet Doppelmesser-Schneidsysteme aus. Dies ist beispielsweise bei der Gewinnung von sauberem Futter sehr gewünscht und garantiert außerdem nachweislich einen optimalen Wiederaufwuchs des Ernteguts.

Zwischen dem Balkenrücken und den Messerrücken ist ein Spalt ausgebildet. Dieser Spalt ist erforderlich, um eine Kollision der Führungsarme der Untermesser mit dem Balkenrücken bei der hin- und her gehenden (Pendel-) Bewegung der Führungsarme zu vermeiden. Diese Gefahr ergibt sich aus der konstruktiven Gestaltung der Führungsarme der Untermesser. Diese erstrecken sich von den Messerführungen zunächst oberhalb des Balkenrückens und tauchen an dem den Messerführungen abgewandten Enden des Balkenrückens vor den Messerrücken nach unten in Richtung Boden durch und nehmen das Untermesser im Bereich der Führungsklingen auf. Die Materialstärke der Führungsarme an sich sowie deren Pendelbewegung erfordern einen ausreichenden Spalt zwischen Balkenrücken und den Messerrücken, damit eine ungehinderte Bewegung der Führungsarme der Untermesser ermöglicht ist.

Die bekannten Doppelmesser-Schneidsysteme erfüllen die an sie gestellten Aufgaben. Allerdings birgt der zwischen dem Balkenrücken und den Messerrücken vorhandene Spalt die Gefahr, dass sich von den Schneidelementen geschnittenes, loses Mähgut in dem Spalt einlagert und diesen verstopft. Dadurch ist der Gutfluss an dem Doppelmesser-Schneidsystem erheblich behindert. Im äußersten Fall kann dies zu einer Gutflussunterbrechung führen. Eine solche Gutflussunterbrechung hat zur Folge, dass das Mähgut, welches im weiteren Verlauf des Mähbetriebs über den Balkenrücken nach hinten abgeführt werden muss, vom verstopfenden Mähgut zurückgehalten wird und das zuletzt abgeschnittene Mähgut allmählich nach vorne in den noch stehenden Bestand des Ernteguts drückt. Dieser Bestand wir dadurch umgelegt und folglich in einer deutlich größeren Höhe über Grund abgeschnitten, was mit der Zeit dazu führt, dass die Stoppelhöhe zunimmt und im äußersten Fall die Schneidfähigkeit des Schneidwerks vollständig aussetzt.

Vor diesem Hintergrund liegt der Erfindung die Aufgabe zugrunde, ein Doppelmesser-Schneidsystem zu schaffen, bei dem die Gefahr einer Verstopfung des Spalts zwischen Balkenrücken und den Messerrücken bei gleichzeitig ungehinderter Beweglichkeit der Führungsarme der Untermesser reduziert ist. Gemäß der Erfindung wird diese Aufgabe mit den Merkmalen des Patentanspruchs 1 gelöst.

Mit der Erfindung ist ein Doppelmesser-Schneidelement für oszillierende Doppelmesser-Schneidsysteme geschaffen, bei dem einerseits eine ungehinderte Bewegung der Führungsarme der Untermesser gewährleistet ist und andererseits die Gefahr einer Verstopfung des Spalts zwischen dem Balkenrücken und den Messerrücken reduziert ist. Durch das Vorsehen des Vorsprungs ist der Spalt bereichsweise reduziert, wodurch die Möglichkeit der Einlagerung von Mähgut verringert ist. Dadurch ist ein verbesserter Gutfluss hervorgerufen. Insbesondere ist die Gefahr einer Gutflussunterbrechung auf ein Minimum reduziert.

Nachfolgend sind für das Verständnis der vorliegenden Erfindung einzelne Begrifflichkeiten definiert:
Schneidwerk: Beschreibt die Ganzheit aus Balkenrücken, Messer- Führungselementen und Mähmessern, inkl. Schnittstelle zum Traggestell und zum oszillierenden Antrieb.
Balkenrücken: Beschreibt das Profil, welches u.a. die Messer - Führungselemente, so auch Schwinghebelmesserführungen, hält. Messer-Führungselemente: Beschreibt die die Ober- und Untermesser führenden Schwinghebel-Messerführungen, welche am Balkenrücken angebracht sind.
Mähmesser: Beschreibt die Anordnung aus Messerrücken und einer Vielzahl von daran befestigten einzelnen Messerklingen.
Führungsklinge: Beschreibt eine mit einem Führungszapfen versehene Messerklinge zur Aufnahme des Messers an der Schwinghebel-Messerführung.

In Weiterbildung der Erfindung ist der Vorsprung jeweils zwischen zwei benachbarten Messerführungen mit Führungsarmen für das Untermesser ausgebildet. Folglich erstreckt sich der Vorsprung über die gesamte Strecke zwischen zwei Führungsarmen für das Untermesser. Dadurch ist der Spalt auch im Bereich Führungsarme für die Obermesser verringert, wodurch der Gutfluss in diesem Bereich ebenfalls erheblich verbessert und die Gefahr einer Verstopfung des Spalts zwischen dem Balkenrücken und den Messerrücken weiter reduziert ist.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die abschnittsweise Draufsicht auf ein Doppelmesser-Schneidsystem nach dem Stand der Technik;
- Figur 2 a): die abschnittsweise Draufsicht auf einen Balkenrücken nach dem Stand der Technik;

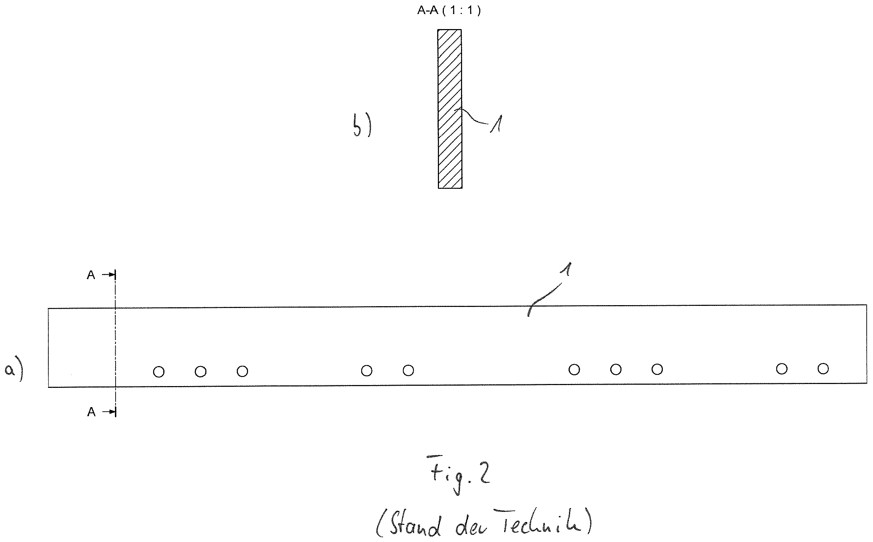

- Figur 2 b): den Schnitt entlang der Linie A-A in Figur 2 a);

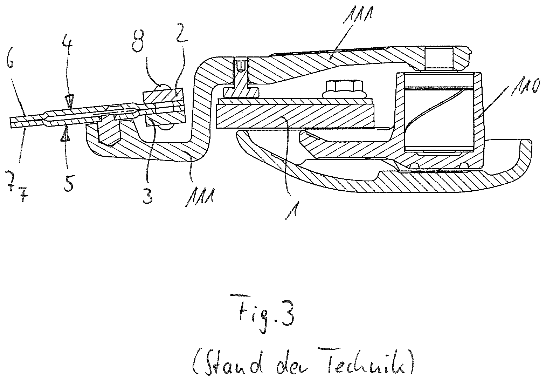

- Figur 3: den Schnitt durch ein Doppelmesser-Schneidsystem nach dem Stand der Technik;

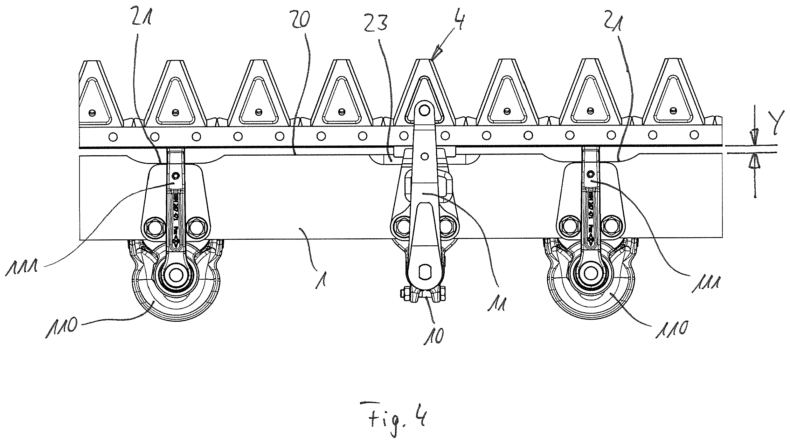

- Figur 4: die abschnittsweise Draufsicht auf ein Doppelmesser-Schneidsystem nach der vorliegenden Erfindung;

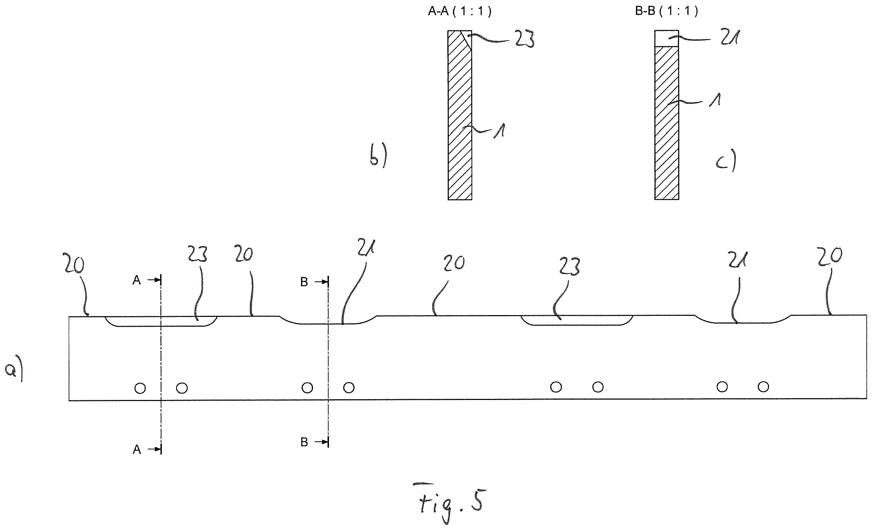

- Figur 5 a): die abschnittsweise Draufsicht auf einen Balkenrücken nach der vorliegenden Erfindung;
- Figur 5 b): den Schnitt entlang der Linie A-A in Figur 5 a);
- Figur 5 c): den Schnitt entlang der Linie B-B in Figur 5 a);

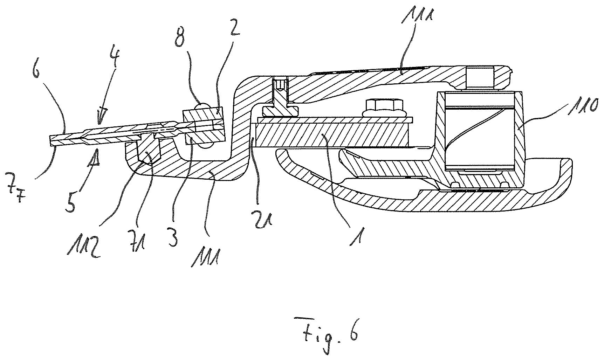

- Figur 6: den Schnitt durch ein Doppelmesser-Schneidsystem nach der vorliegenden Erfindung.

Das als Ausführungsbeispiel gewählte Doppelmesser-Schneidsystem besteht aus einem Balkenrücken 1 an dem ein Messerrücken 2 für ein Obermesser 4 und ein Messerrücken 3 für ein Untermesser 5 angeordnet sind. An dem Messerrücken 2 für das Obermesser 4 ist eine Vielzahl von Doppelmesser-Schneidelementen 6 befestigt; an dem Messerrücken 3 für das Untermesser 5 ist eine Vielzahl von Doppelmesser-Schneidelementen 7 angeordnet. Die Doppelmesser-Schneidelemente 6 und 7 sind mittels Befestigungsmitteln 8 an den Messerrücken 2, 3 befestigt.

An dem Balkenrücken 1 sind Messerführungen 10 für das Obermesser 4 und Messerführungen 110 für das Untermesser 5 befestigt. Die Messerführungen 10, 110 umfassen Führungsarme 11, 111. Die Führungsarme 11 weisen Federeigenschaften auf, wodurch das Obermesser 4 mit seinen Schneidelementen 6 gegen das Untermesser 5 mit seinen Schneidelementen 7 gedrückt wird.

An den freien Enden der Führungsarme 11, 111 sind Buchsen ausgebildet, von denen in den Figuren lediglich die Buchse 112 des Führungsarms 111 des Untermessers 5 dargestellt ist. Die Buchsen dienen zur Aufnahme von Führungszapfen an Doppelmesser-Schneidelementen 6, 7, von denen in den Figuren lediglich der Führungszapfen 71 eines Schneidelements 7 des Untermessers 5 dargestellt ist. Die mit einem Führungszapfen versehenen Messerklingen bilden jeweils eine Führungsklinge, die in den Figuren 3 und 6 beispielhaft für die dargestellte Untermesserführung mit "7_{F}" bezeichnet ist.

An dem Balkenrücken 1 ist auf seiner den Messerführungen 10, 110 abgewandten Seite abschnittsweise ein Vorsprung 20 ausgebildet. Im Bereich der Vorsprünge 20 ist zwischen dem Balkenrücken 1 und den Messerrücken 2, 3 ein Spalt y ausgebildet. Erkennbar erstreckt sich der Vorsprung 20 in dem Bereich zwischen benachbarten Messerführungen 110 mit Führungsarmen 111 für das Untermesser 5. Der Vorsprung 20 erstreckt sich somit im Ausführungsbeispiel auch durch den Bereich von den Messerführungen 10 mit Führungsarmen 11 für das Obermesser 4.

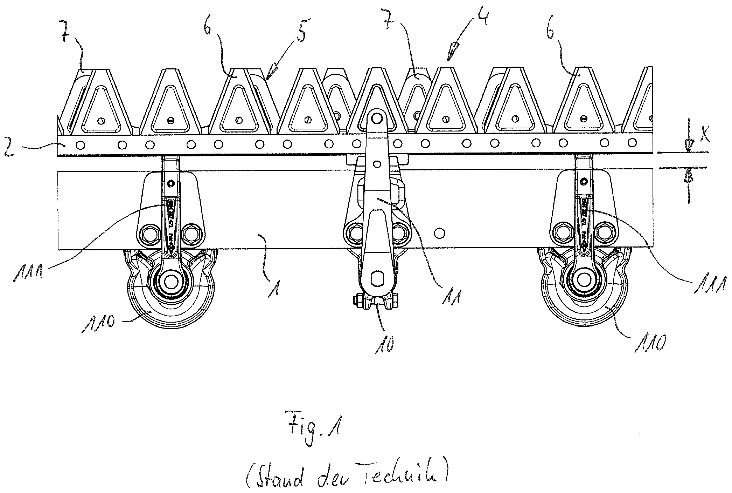

Zwischen den Vorsprüngen 20 sind Aussparungen 21 ausgebildet, die eine Vergrößerung des Abstands zwischen Balkenrücken 1 und den Messerrücken 2, 3 bewirken. Dieser Abstand entspricht im Wesentlichen der Breite des Spalts x zwischen Balkenrücken 1 und den Messerrücken 2, 3 nach dem Stand der Technik, wie er in Figur 1 dargestellt ist. In Folge dessen ist gewährleistet, dass die Führungsarme 111 für das Untermesser 5 die aus dem Stand der Technik bekannte und für eine ungehinderte Bewegung erforderliche Bewegungsfreiheit haben.

Erkennbar weisen die Vorsprünge 20 jeweils einen Radius auf, der den Übergang zu den Aussparungen 21 bildet. An dem Balkenrücken 1 ist auf seiner den Messerführungen 10, 110 abgewandten Seite im Bereich der Führungsarme 11 für das Obermesser 4 jeweils eine Abflachung 23 ausgebildet. Diese ist im Ausführungsbeispiel von einer unter einem Winkel zur Horizontalen erfolgten Fräsung gebildet.

In Abwandlung des Ausführungsbeispiels besteht bei Bedarf auch die Möglichkeit, im Bereich der Führungsarme 111 für das Untermesser 4 die Vorsprünge 20 zu unterbrechen und dort Aussparungen 21 vorzusehen.

Durch die Vorsprünge 20 ist der zwischen Balkenrücken 1 und den Messerrücken 2, 3 gebildete Spalt y im Verhältnis zu dem aus dem Stand der Technik bekannten Spalt x reduziert. Allein im Bereich der Führungsarme und dort insbesondere im Bereich der Führungsarme für das Untermesser ist der Vorsprung durch Aussparungen unterbrochen, so dass eine einwandfreie Bewegbarkeit der Führungsarme im Betrieb gewährleistet ist. Gleichzeitig bewirken die Vorsprünge aufgrund der Verringerung des Spalts eine erhebliche Verbesserung des Gutflusses.

## Patentansprüche

1. Doppelmesser-Schneidsystem bestehend aus einem Balkenrücken (1), an dem ein Messerrücken (2) für ein Obermesser (4) und ein Messerrücken (3) für ein Untermesser (5) angeordnet sind und an den Messerrücken (2, 3) eine Vielzahl von Doppelmesser-Schneidelementen (6, 7) befestigt sind, wobei Obermesser (4) und Untermesser (5) oszillierend hin- und hergehend angetrieben sind, und an dem Balkenrücken (1) Messerführungen (10) für das Obermesser (4) und Messerführungen (110) für das Untermesser (5) befestigt sind, die Führungsarme (11, 111) umfassen, wobei an dem Balkenrücken (1) auf seiner den Messerführungen (10, 110) abgewandten Seite zumindest in dem Bereich zwischen benachbarten Messerführungen (110) mit Führungsarmen (111) für das Untermesser (5) und den Messerführungen (10) mit Führungsarmen (11) für das Obermesser (4) jeweils ein Vorsprung (20) ausgebildet ist, **dadurch gekennzeichnet, dass** im Bereich der Führungsarme (111) für das Untermesser (5) in dem Vorsprung (20) Aussparungen (21) ausgebildet sind.

2. Doppelmesser-Schneidsystem nach Anspruch 1, **dadurch gekennzeichnet, dass** der Vorsprung (20) jeweils zwischen zwei benachbarten Messerführungen (110) mit Führungsarmen (111) für das Untermesser (5) ausgebildet ist.

3. Doppelmesser-Schneidsystem nach Anspruch 1 oder 2, **dadurch gekennzeichnet, dass** die Vorsprünge (20) jeweils einen Radius aufweisen.

4. Doppelmesser-Schneidsystem nach Anspruch 2 oder 3, **dadurch gekennzeichnet, dass** an dem Balkenrücken (1) auf seiner den Messerführungen (10, 110) abgewandten Seite im Bereich der Führungsarme (11) für das Obermesser (4) jeweils ein Abflachung (23) ausgebildet ist.

## Claims

1. Dual knife cutting system consisting of a beam back (1), on which a knife back (2) for an upper knife (4) and a knife back (3) for a lower knife (5) are arranged and a plurality of dual knife cutting elements (6, 7) are attached to the knife backs (2, 3), wherein the upper knife (4) and lower knife (5) are driven to move back and forth in an oscillating manner, and knife guides (10) for the upper knife (4) and knife guides (110) for the lower knife (5) are attached to the beam back (1), which comprise guide arms (11, 111), wherein on the beam back (1) on its side facing away from the knife guides (10, 110), at least in the area between adjacent knife guides (110) with guide arms (111) for the lower knife (5) and the knife guides (10) with guide arms (11) for the upper knife (4), a projection (20) is respectively formed, **characterised in that** in the area of the guide arms (111) for the lower knife (5) recesses (21) are formed in the projection (20).

2. Dual knife cutting system according to claim 1, **characterised in that** the projection (20) is formed in each case between two adjacent knife guides (110) with guide arms (111) for the lower knife (5).

3. Dual knife cutting system according to claim 1 or 2, **characterised in that** the projections (20) each have a radius.

4. Dual knife cutting system according to claim 2 or 3, **characterised in that** a flattened portion (23) is respectively formed on the beam back (1) on its side facing away from the knife guides (10, 110) in the area of the guide arms (11) for the upper knife (4).

## Revendications

1. Système de coupe à double lame constitué d'un dos de barre (1) sur lequel un dos de lame (2) pour une lame supérieure (4) et un dos de lame (3) pour une lame inférieure (5) sont en place et de nombreux éléments de coupe à double lame (6, 7) sont fixés sur les dos de lames (2,3), sachant que la lame supérieure (4) et la lame inférieure (5) sont entraînées par oscillation en va-et-vient et que des guidages de lames (10) pour la lame supérieure (4) et des guidages de lames (110) pour la lame inférieure (5), qui comprennent des bras de guidage (11, 111), sont fixés sur le dos de barre (1), sachant que sur le côté du dos de barre (1) opposé aux guidages de lames (10, 110), au moins dans la zone située entre des guidages de lames (110) voisins avec des bras de guidage (111) pour la lame inférieure (5) et les guidages de lames (10) avec des bras de guidage (11) pour la lame supérieure (4), une saillie (20) est respectivement formée, **caractérisé en ce que** dans la zone des bras de guidage (111) pour la lame inférieure (5), des évidements (21) sont formés dans la saillie (20).

2. Système de coupe à doubles lames selon la revendication 1, **caractérisé en ce que** la saillie (20) est respectivement formée entre deux guidages de lames (110) voisins dotés de bras de guidage (111) pour la lame inférieure (5).

3. Système de coupe à doubles lames selon la revendication 1 ou 2, **caractérisé en ce que** les saillies (20) présentent respectivement un rayon.

4. Système de coupe à doubles lames selon la revendication 2 ou 3, **caractérisé en ce que** sur le côté du dos de barre (1) opposé aux guidages de lames (10, 110), un aplatissement (23) est respectivement formé dans la zone des bras de guidage (11) pour la lame supérieure (4).
